# EUROPEAN PATENT SPECIFICATION

(11) **EP 3 831 771 B1**
(45) Date of publication and mention of the grant of the patent: **31.07.2024**
(21) Application number: 19844382.2
(22) Date of filing: 28.05.2019
(51) Int. Cl.: C01B 25/455, H01M 10/0568, H01M 10/0567, C01D 15/00, H01M 10/052

(54) **METHOD FOR PRODUCING LITHIUM DIFLUOROPHOSPHATE CRYSTAL IN HIGH PURITY AND NON-AQUEOUS ELECTROLYTE FOR SECONDARY BATTERY USING SAME**
VERFAHREN ZUR HERSTELLUNG VON LITHIUMDIFLUORPHOSPHATKRISTALL MIT HOHER REINHEIT UND WASSERFREIER ELEKTROLYT FÜR SEKUNDÄRBATTERIE DAMIT
PROCÉDÉ DE PRODUCTION D'UN CRISTAL DE DIFLUOROPHOSPHATE DE LITHIUM DE PURETÉ ÉLEVÉE ET ÉLECTROLYTE NON AQUEUX POUR BATTERIE SECONDAIRE L'UTILISANT

(30) Priority: 02.08.2018 KR 20180090369
(43) Date of publication of application: 09.06.2021
(73) Proprietor: Chun Bo. Ltd., Chungju-si, Chungcheongbuk-do 27459 (KR)
(72) Inventor: LEE, Sang Yul, Chungju-si, Chungcheongbuk-do 27459 (KR); KIM, Kyoung Cheol, Chungju-si, Chungcheongbuk-do 27459 (KR); KIM, Kyoung Hwan, Chungju-si, Chungcheongbuk-do 27459 (KR); JEON, Ji Ung, Chungju-si, Chungcheongbuk-do 27459 (KR); PARK, Su Cheol, Chungju-si, Chungcheongbuk-do 27459 (KR)
(74) Representative: Gilani, Anwar
(86) International application number: PCT/KR2019/006350
(87) International publication number: WO 2020/027415

(56) References cited:
- EP-A1- 3 176 129
- EP-A1- 3 231 769
- JP-A- 2014 015 343
- KR-A- 20130 041 183
- KR-A- 20130 041 184
- KR-A- 20170 037 577
- KR-A- 20170 078 784
- KR-B1- 101 925 051
- US-A1- 2015 263 384
- DATABASE WPI Week 201783, Derwent World Patents Index; AN 2017-75345U, XP002805977

## Description

### [Technical Field]

The present invention relates to a method for producing a lithium difluorophosphate crystal in high yield and high purity, and a non-aqueous electrolyte for a secondary battery including the lithium difluorophosphate crystal produced by the above method.

### [Background Art]

Lithium difluorophosphate is an industrially useful compound which is used as a preservative for wood (refer to Patent Document 1), a toothbrush disinfectant, a polymer stabilizer, and the like.

Meanwhile, with the recent reduction in weight and size of electric products, the development of secondary batteries having a high energy density, for example, lithium-ion secondary batteries, is in progress. Further, as the application field of these lithium-ion secondary batteries is expanded, the improvement of battery characteristics is further desired. In order to improve battery characteristics such as load characteristics, cycle characteristics, preservation characteristics, low-temperature characteristics, and the like of such lithium-ion secondary batteries, various reviews have been conducted on non-aqueous solvents and electrolytes. For example, by using an electrolyte containing a vinyl ethylene carbonate compound, batteries are manufactured that suppress the decomposition of an electrolyte to a minimum and have excellent preservation characteristics and cycle characteristics. For conventional lithium-ion secondary batteries, a technique of increasing the recovery capacity after preservation by using an electrolyte containing propane sultone is disclosed.

However, the conventional lithium-ion secondary battery electrolyte has an effect of improving the preservation characteristics and cycle characteristics to some extent, but since a film having high resistance is formed on the side of a negative electrode, there is a problem in that low-temperature discharge characteristics, high-current discharge characteristics, and the like are deteriorated.

Accordingly, a technique in which lithium difluorophosphate is applied as a secondary battery electrolyte component as an additive with excellent safety while improving low-temperature discharge characteristics, high-current discharge characteristics, high-temperature preservation characteristics, and cycle characteristics was developed, but there is a problem in that manufacturing efficiency, purity, and the like are deteriorated when lithium difluorophosphate is produced.

CN 107 285 293 A describes a method of producing lithium difluorophosphate. The lithium difluorophosphate is obtained by performing a reaction on dilfluorophosphate fluorinated by dihalogen phosphate, lithium salt and water in a non-aqueous solvent.

EP 3 176 129 A1 describes a method for producing a difluorophosphate. In the method, at least one salt selected from the group consisting of halides, carbonates, borates, phosphates, hydroxides, and oxides of alkali metals, alkali earth metals, and oniums, one phosphorus compound selected from the group consisting of phosphorous oxychlorides and phosphorus chlorides, water, and hydrogen fluoride are reacted.

### [Disclosure]

### [Technical Problem]

The present invention has been devised to solve the above problems, and the problem to be solved by the present invention is to propose a new method for producing a lithium difluorophosphate crystal in high purity under specific conditions, and it is an object to provide the produced lithium difluorophosphate crystal as an electrolyte for a secondary battery and the like.

### [Technical Solution]

In order to solve the above problems, the method for producing a lithium difluorophosphate crystal according to the present invention produces a lithium difluorophosphate crystal by performing a process including step 1 of synthesizing a lithium difluorophosphate crystal (LiPO₂F₂) from dihalophosphate represented by Chemical Formula 1 below; and step 2 of purifying and recrystallizing the lithium difluorophosphate crystal. Step 1 comprises: step 1-1 of synthesizing difluorophosphate represented by Chemical Formula 2 below by reacting a mixed solution in which dihalophosphate represented by Chemical Formula 1 below, a fluorinating agent, and a non-aqueous solvent are mixed under an inert gas; step 1-2 of adding and reacting the difluorophosphate dropwise to a mixed solution of a lithium salt, water, and a non-aqueous solvent, and then evaporating the non-aqueous solvent to obtain a solid; and step 1-3 of dissolving the solid in a non-aqueous solvent, recrystallizing at 25°C to 0°C, and filtering to obtain a lithium difluorophosphate crystal. The mixed solution in step 1-1 comprises dihalophosphate and a fluorinating agent at a molar ratio of 1:2.0 to 3.0. The yield of the lithium difluorophosphate crystal synthesized in step 1 is 82% to 92%, and the purity is 95% to 98%. The yield of the recrystallized lithium difluorophosphate crystal in step 2 is 80% to 90%, and the purity may be 99.00% to 99.99%.

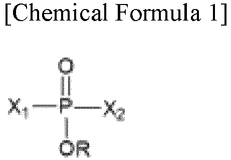

In Chemical Formula 1, X₁ and X₂ are each independently -Cl, -Br, or -I, and R is a C₁ to C₁₀ straight-chain alkyl group, a C₃ to C₁₀ branched alkyl group, a C₆ to C₁₀ cycloalkyl group, or a C₆ to C₂₀ aryl group.

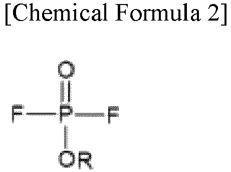

In Chemical Formula 2, R is a C₁ to C₁₀ straight-chain alkyl group, a C₃ to C₁₀ branched alkyl group, a C₆ to C₁₀ cycloalkyl group, or a C₆ to C₂₀ aryl group, provided that R in Chemical Formula 2 is identical to R in Chemical Formula 1.

In a preferred exemplary embodiment of the present invention, the non-aqueous solvents in step 1-1 and step 1-2 may each independently include one or more selected from the group consisting of cyclic carbonate, chain carbonate, cyclic ester, chain ester, n-hexane, cyclohexane, n-heptane, iso-heptane, benzene, xylene, acetonitrile, methyl ether, ethyl ether, ethylene glycol dimethyl ether, ethylene glycol diethyl ether, propylene glycol dimethyl ether, diethylene glycol dimethyl ether, and tetrahydrofuran.

In a preferred exemplary embodiment of the present invention, the lithium salt in step 1-2 may include one or more selected from the group consisting of lithium chloride, lithium bromide, lithium fluoride, lithium iodide, lithium hydroxide, lithium carbonate, lithium bicarbonate, lithium phosphate, lithium metaphosphate, lithium acetate, and lithium sulfate.

In a preferred exemplary embodiment of the present invention, the mixed solution in step 1-2 may include a lithium salt and water at a molar ratio of 1:0.10 to 0.65.

In a preferred exemplary embodiment of the present invention, the amount of difluorophosphate added dropwise in step 1-2 may be 230 parts by weight to 350 parts by weight based on 100 parts by weight of the lithium salt.

In a preferred exemplary embodiment of the present invention, the non-aqueous solvent in the mixed solution of step 1-2 may be used at an amount of 3.5 mL to 5 mL per 1 g of difluorophosphate added dropwise.

In a preferred exemplary embodiment of the present invention, in the method for producing a lithium difluorophosphate crystal according to the present invention, step 2 may perform a process including step 2-1 of performing a purification process by adding and stirring a lithium difluorophosphate crystal and an aqueous alcohol solution having a carbon number of 2 to 4 in a reactor; step 2-2 of firstly vacuum concentrating a purified reaction product; step 2-3 of secondly vacuum concentrating a first vacuum concentrate; and step 2-4 of performing a drying process for a second vacuum concentrate and cooling to obtain a recrystallized lithium difluorophosphate crystal.

In a preferred exemplary embodiment of the present invention, the reactor in step 2-1 may be installed with a reactor jacket, a vacuum pump, a condenser, and a receiver. The aqueous alcohol solution in step 2-1 may be used at 500 parts by weight to 700 parts by weight based on 100 parts by weight of the lithium difluorophosphate crystal. The purification process in step 2-1 may be performed under a nitrogen atmosphere at 23°C to 30°C. The first vacuum concentration in step 2-2 may be performed under a pressure of 25 torr (3330 Pa) to 30 torr (4000 Pa) at 40°C to 45°C, and the second vacuum concentration in step 2-3 may be performed under a pressure of 2 torr (270 Pa) or less at 40°C to 45°C.

### [Advantageous Effects]

The production method of a lithium difluorophosphate crystal according to the present invention can produce a lithium difluorophosphate crystal in high yield and high purity by introducing a specific catalyst at an optimum composition ratio, and it is possible to provide a non-aqueous electrolyte for a secondary battery with excellent stability by introducing the produced lithium difluorophosphate crystal as an electrolyte of a non-aqueous electrolyte for a secondary battery.

### [Modes of the Invention]

Hereinafter, the method for producing a lithium difluorophosphate crystal in high purity according to the present invention will be described in more detail.

The lithium difluorophosphate crystal of the present invention may be produced by performing a process including step 1 of synthesizing a lithium difluorophosphate crystal (LiPO₂F₂); and step 2 of purifying and recrystallizing the lithium difluorophosphate crystal.

Step 1 includes a process including step 1-1 of synthesizing difluorophosphate represented by Chemical Formula 2 below by reacting a mixed solution in which dihalophosphate represented by Chemical Formula 1 below, a fluorinating agent, and a non-aqueous solvent are mixed under an inert gas; step 1-2 of adding and reacting the difluorophosphate dropwise to a mixed solution of a lithium salt, water, and a non-aqueous solvent, and then evaporating the non-aqueous solvent to obtain a solid; and step 1-3 of dissolving the solid in a non-aqueous solvent, recrystallizing at 25°C to 0°C, and filtering to obtain a lithium difluorophosphate crystal.

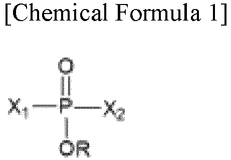

In Chemical Formula 1, X₁ and X₂ are each independently -Cl, -Br, or -I, and preferably, -Cl or -Br, and more preferably, -Cl. In addition, R is a C₁ to C₁₀ straight-chain alkyl group, a C₃ to C₁₀ branched alkyl group, a C₆ to C₁₀ cycloalkyl group, or a C₆ to C₂₀ aryl group, and preferably, a C₂ to C₅ straight-chain alkyl group or a C₃ to C₅ branched alkyl group, phenyl group, or benzyl group.

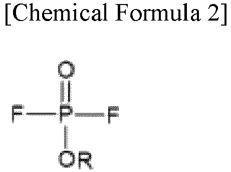

In Chemical Formula 2, R is a C₁ to C₁₀ straight-chain alkyl group, a C₃ to C₁₀ branched alkyl group, a C₆ to C₁₀ cycloalkyl group, or a C₆ to C₂₀ aryl group, and preferably, a C₂ to C₅ straight-chain alkyl group or a C₃ to C₅ branched alkyl group, phenyl group, or benzyl group. Meanwhile, R in Chemical Formula 2 is identical to R in Chemical Formula 1.

The inert gas in step 1-1 is a general inert gas used in the art, and nitrogen gas or the like may be used.

In step 1-1, a mixed solution, in which dihalophosphate, a fluorinating agent, and a non-aqueous solvent are mixed, is slowly stirred followed by increasing the reaction temperature to 40°C to 150°C, preferably, 45°C to 120°C, and more preferably, 50°C to 80°C for about 10 hours to 20 hours, and preferably, 15 hours to 20 hours, and by reacting at the reaction temperature for 6 hours to 10 hours, and preferably, 6.5 hours to 9 hours, the difluorophosphate may be synthesized. Then, the solution (including the reaction product) subjected to the reaction is lowered to room temperature and filtered by a general method used in the art to obtain difluorophosphate. In this case, when heating the mixed solution to an appropriate reaction temperature, if the temperature increase rate is too fast, the reaction stability may be deteriorated. Therefore, it is preferable to gradually increase the temperature of the mixed solution to the reaction temperature. In addition, when the reaction temperature is less than 40°C, the reaction rate is too low and thus productivity decreases, and when the reaction temperature exceeds 150°C, the reaction occurs rapidly and a problem may occur in which the reaction product is decomposed again.

For a specific example to aid understanding of the reaction of step 1-1, it is as shown in Equation 1 below.

[Equation 1] RPO₂Cl₂ + fluorinating agent (fluoride) -> RPO₂F₂ + chloride

The mixed solution of step 1-1 may include dihalophosphate and a fluorinating agent at a molar ratio of 1: 1.5 to 3.0, preferably, at a molar ratio of 1: 2.0 to 3.0, and more preferably, at a molar ratio of 1: 2.2 to 2.7. In this case, when the molar ratio of the fluorinating agent is less than 1.5 molar ratio, the synthesis of the difluorophosphate represented by Chemical Formula 2 above may be unsatisfactory, resulting in a problem that the yield of a lithium difluorophosphate crystal is lowered. Also, it is uneconomical that the content of the fluorinating agent exceeds 3.0 molar ratio, and there may be a problem in that an unnecessary reaction product is generated due to an unreacted fluorinating agent component, and the synthesis amount of difluorophosphate is rather reduced.

In addition, the fluorinating agent may include one or two or more selected from NH₄F (ammonium fluoride), NaF, KF, CeF (cesium fluoride), tri(C1 to C3 alkyl)amine trihydrofluoride salt, and pyridine hydrogen fluoride salt, and preferably, it may include one or two or more selected from NH₄F, NaF, and triethylamine trihydrofluoride salt.

The non-aqueous solvent in step 1-1 may include one or two or more selected from the group consisting of cyclic carbonate, chain carbonate, cyclic ester, chain ester, n-hexane, cyclohexane, n-heptane, iso-heptane, benzene, xylene, acetonitrile, methyl ether, ethyl ether, ethylene glycol dimethyl ether, ethylene glycol diethyl ether, propylene glycol dimethyl ether, diethylene glycol dimethyl ether, and tetrahydrofuran. In addition, it is preferable that the amount of the non-aqueous solvent in step 1-1 is used such that the concentration of the dihalophosphate in the mixed solution is 7 g/mL to 9 g/mL, and preferably, 7.5 g/mol to 8.5 g/mol. In this case, when the concentration of dihalophosphate is out of a range of 7 g/mL to 9 g/mL due to too little or too much use of the non-aqueous solvent, there may be a problem in that the synthesis amount of difluorophosphate decreases.

Next, step 1-2 is a step of reacting a lithium salt, water, and difluorophosphate, which is a reaction product of step 1-1, to produce a lithium difluorophosphate crystal. For a specific example to aid understanding, a lithium difluorophosphate crystal which is the reaction product may be formed through a reaction as shown in Equation 2 below. RPO2F2 + LiX + H2O → LiPO2F2 + HX + ROH

In step 1-2, the difluorophosphate is added dropwise to a mixed solution of a lithium salt, water, and a non-aqueous solvent and reacted, followed by filtration to obtain a lithium difluorophosphate crystal. In addition, when difluorophosphate is added dropwise, a separate diluting solvent is not used, and as reaction heat is generated, it is preferable to slowly perform the dropwise addition.

The mixed solution in step 1-2 may include a lithium salt and water at a molar ratio of 1: 0.10 to 0.65, preferably, at a molar ratio of 1: 0.15 to 0.45, and more preferably, at a molar ratio of 1: 0.20 to 0.35. In this case, if the molar ratio of water is less than 0.10 molar ratio, there may be a problem in that the synthesis yield of LiPO₂F₂ is lowered, and even if the molar ratio of water exceeds 0.65, there is no increase in the synthesis yield of LiPO₂F₂. Moreover, since there may be a problem in that impurity is generated due to participation in the reaction, it is preferable to use a lithium salt and water within the above range.

In step 1-2, the dropwise addition amount of difluorophosphate may preferably be 230 parts by weight to 350 parts by weight, preferably, 250 parts by weight to 320 parts by weight, and more preferably, 270 parts by weight to 305 parts by weight, based on 100 parts by weight of a lithium salt. When the dropwise addition amount of difluorophosphate is added dropwise outside the above range, the synthesis yield of LiPO₂F₂ may be lowered, and thus, it is preferable to add difluorophosphate dropwise within the above range.

In step 1-2, the non-aqueous solvent of the mixed solution may be the same as or different from the non-aqueous solvent of step 1-1, and the non-aqueous solvent of step 1-2 may be used alone or by two or more selected from cyclic carbonate, chain carbonate, cyclic ester, chain ester, n-hexane, cyclohexane, n-heptane, iso-heptane, benzene, xylene, acetonitrile, methyl ether, ethyl ether, ethylene glycol dimethyl ether, ethylene glycol diethyl ether, propylene glycol dimethyl ether, diethylene glycol dimethyl ether, and tetrahydrofuran.

In addition, it is preferable that the amount of the non-aqueous solvent used in step 1-2 is 3.5 mL to 5 mL per 1 g of difluorophosphate to be added dropwise, preferably, 3.8 mL to 4.6 mL per 1 g of difluorophosphate, and more preferably, 3.8 mL to 4.4 mL per 1g of difluorophosphate.

After adding difluorophosphate dropwise while stirring the mixed solution in step 1-2, by stirring continuously and performing a reaction at 50°C to 70°C, preferably, 50°C to 60°C for 3 hours to 8 hours, and preferably, 4 hours to 6.5 hours, a lithium difluorophosphate crystal may be obtained as a reaction product. In addition, when the reaction is completed, the reaction solution including the reaction product may be depressurized to evaporate the non-aqueous solvent to obtain a solid.

Step 1-3 is a step of washing unreacted impurities, impurities, and the like from the solid, and it is a process of obtaining a lithium difluorophosphate crystal by dissolving the solid of step 1-2 in a non-aqueous solvent, recrystallizing at 25°C to 0°C, and filtering. In this case, the non-aqueous solvent is the same as the non-aqueous solvent of step 1-1 and/or step 1-2.

As such, the lithium difluorophosphate crystal obtained by performing step 1-1 to step 1-3 may have a yield of 82% to 92% and a purity of 95% to 98%, and preferably, the yield may be 85.0% to 92.0%, and the purity may be 95.20% to 98.00%.

In the present invention, in order to further increase the yield and purity, in particular, the purity of the lithium difluorophosphate crystal produced in step 1, step 2 of purifying and recrystallizing the lithium difluorophosphate crystal produced in step 1 is further performed.

Step 2 may perform step 2-1 of performing a purification process by adding and stirring a lithium difluorophosphate crystal and an aqueous alcohol solution in a reactor; step 2-2 of firstly vacuum concentrating the purified reaction product; step 2-3 of secondly vacuum concentrating a first vacuum concentrate; and step 2-4 of performing a drying process for a second vacuum concentrate and cooling to obtain a recrystallized lithium difluorophosphate crystal.

The reactor in step 2 may be installed with a reactor jacket, a vacuum pump, a condenser, a scrubber, and/or a receiver.

The aqueous alcohol solution in step 2-1 may be used as an aqueous alcohol solution having a carbon number of 2 to 4, preferably, an aqueous alcohol solution having a carbon number of 2 to 3, and more preferably, an aqueous ethanol solution having a concentration of 99.5% to 99.8%. In addition, the amount of the aqueous alcohol solution used may be 500 parts by weight to 700 parts by weight, preferably, 540 parts by weight to 660 parts by weight, and more preferably, 560 parts by weight to 640 parts by weight, based on 100 parts by weight of the lithium difluorophosphate crystal. In this case, when the amount of the aqueous alcohol solution used is less than 500 parts by weight, there may be a problem in that solubility decreases and purification is deteriorated, and when it is used by exceeding 700 parts by weight, there may be a problem in that the production cost increases and the economic feasibility decreases, and thus, it is preferable to use within the above range.

In addition, the purification process of step 2-1 is preferably performed under a nitrogen atmosphere at 23°C to 30°C, and preferably, under a nitrogen atmosphere at 23°C to 27°C.

Next, step 2-2 is a process of firstly vacuum concentrating the reaction product subjected to the purification process in step 2-1, and the first vacuum concentration may be performed by increasing the internal temperature of the reactor to 40°C to 45°C, and then the vacuum concentration may be carried out while maintaining a pressure of 25 torr (3330 Pa) to 30 torr (4000 Pa). Also, it may be carried out until alcohol vapor distilled from the reactor is condensed in the condenser and a liquid is not collected in the receiver. In this case, when the first vacuum concentration is performed at less than 40°C, there may be a problem in that the solvent is not distilled, resulting in a decrease in productivity, and when the first vacuum concentration is performed at a temperature exceeding 45°C, crystals may be precipitated and a problem may occur in which it is impossible to move to a second dryer. In addition, when the first vacuum concentration pressure is less than 25 torr (3330 Pa), there may be a problem in that the solvent passes to the pump, and when it more than 30 torr (4000 Pa), there may be a problem in that the time increases and productivity decreases.

Next, step 2-3 is a process of secondly vacuum concentrating a first vacuum concentrate, and it is preferably performed under a pressure of 2 torr (270 Pa) or less at 40°C to 45°C, and preferably, under a pressure of 1 torr (130 Pa) or less at 40°C to 45°C. Step 2-3 terminates the second vacuum concentration process by destroying the vacuum with nitrogen when an appropriate amount of a vacuum concentrate is generated. In this case, when the second vacuum concentration pressure is more than 2 torr (270 Pa), there may be a problem in that the concentration time increases and thus, productivity decreases.

Next, in steps 2-4, the second vacuum concentrate is dried, in which drying may be performed using a general drying method used in the art, and for a preferred embodiment, it is preferable to perform rotary drying by using a rotary evaporator under a vacuum atmosphere of 2 torr (270 Pa) or less at 70°C to 90°C, and preferably, under a vacuum atmosphere of 1 torr (130 Pa) or less at 80°C to 90° C for about 10 hours to 14 hours.

When the drying process is completed, the dried product is cooled to 25°C or less to finally obtain a recrystallized lithium difluorophosphate crystal.

The recrystallized lithium difluorophosphate crystal of the present invention produced by performing a process of step 1 and step 2 in this way may have a yield of 80% or more and a purity of 98.5% or more, preferably, a yield of 80% to 90% and a purity of 99.00% to 99.99%, and more preferably, a yield of 82.0% to 90% and a purity of 99.40% to 99.99%.

In addition, the recrystallized lithium difluorophosphate crystal of the present invention may satisfy a relative purity increase/decrease percentage of 1.0% to 6.0%, preferably, 1.5% to 4.5%, and more preferably, 1.6% to 3.0%, as measured according to Mathematical Equation 1 below. Relative purity increase / decrease percentage = {(purity of recrystallized LiPO2F2 crystal (%) - purity of LiPO2F2 crystal purified by conventional method (%)) / purity of LiPO2F2 crystal purified by conventional method (%)} × 100%

In Mathematical Equation 1, the recrystallized LiPO₂F₂ crystal refers to a recrystallized LiPO₂F₂ crystal produced by performing step 1 of synthesizing the LiPO₂F₂ crystal of the present invention and step 2 of recrystallizing by purifying the same. The LiPO₂F₂ crystal purified by the conventional method refers to a purified LiPO₂F₂ crystal obtained by re-dissolving the LiPO₂F₂ crystal synthesized in step 1 in acetonitrile, recrystallizing at 25°C to 0°C, and filtering.

The lithium difluorophosphate crystal of the present invention produced by this method may be used for various purposes, for example, it may be used as a stabilizer for a chloroethylene polymer, a catalyst for a reaction lubricant, a disinfectant for a toothbrush, a preservative for wood, and the like, and, preferably, it may be used as an electrolyte for a non-aqueous electrolyte for a secondary battery.

Hereinafter, the present invention will be described in more detail through exemplary embodiments.

### [Example]

### Example 1: Production of recrystallized lithium difluorophosphate crystal

### (1) Production of lithium difluorophosphate crystal (step 1)

In a dried reactor under nitrogen protection, 38.2 g (0.2 mol) of dihalophosphate represented by Chemical Formula 1-1 below, 18.52 g (0.5 mol) of NH₄F (ammonium fluoride), and tetraethylene glycol dimethyl ether (0.66 g, 0.003 mol) were added to 300 mL of acetonitrile which is a non-aqueous solvent, and the temperature of the reactor was slowly increased to about 55°C for 20 hours, and then it was stirred at about 55°C to perform a reaction for 8 hours.

After completion of the reaction, the temperature of the reactor was lowered to room temperature, and it was filtered and distilled to obtain 24.3 g of difluorophosphate represented by Chemical Formula 2-1 below.

Next, in another dried reaction vessel, 8.48 g (0.2 mol) of lithium chloride, 0.9 g (0.05 mol) of water, and 100 mL of acetonitrile were mixed to prepare a mixed solution under a nitrogen atmosphere, and the mixed solution was stirred while difluorophosphate represented by Chemical Formula 2-1 above was added dropwise. In this case, the amount of difluorophosphate added dropwise was 24.3 g. In addition, after slowly stirring and reacting at 55°C for 5 hours, the solvent was evaporated under reduced pressure to obtain a solid lithium difluorophosphate crystal.

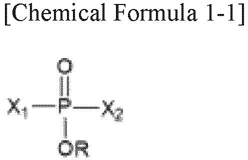

In Chemical Formula 1-1, X₁ and X₂ are -Cl, and R is a C₃ straight-chain alkyl group.

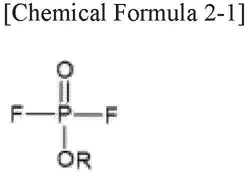

In Chemical Formula 2-1, R is a C₃ straight-chain alkyl group.

### (2) Production of recrystallized lithium difluorophosphate crystal (step 2)

In a reactor (product name LS-SR-401, manufacturer: Chunbo) in which a reactor jacket, a vacuum pump, a condenser, and/or a receiver are installed, 604 parts by weight of an aqueous ethanol solution (aqueous alcohol solution) at a concentration of 99.5% to 99.8% was added and stirred based on 100 parts by weight of the lithium difluorophosphate crystal, the reactor temperature was maintained at 24°C to 25°C, and by-product lithium fluoride was separated by filtration.

Next, hot water was added to the reactor jacket, and the vacuum pump was operated while maintaining the internal temperature of the reactor at 43°C to 44°C to perform a first vacuum concentration while maintaining an initial pressure of about 28 torr (3730 Pa) inside the reactor. The first vacuum concentration was performed until alcohol vapor distilled from the reactor was condensed in the condenser and no liquid was collected in the receiver.

Next, while maintaining the internal temperature at 43°C to 44°C, the pressure was reduced to 1 torr (130 Pa), and the remaining aqueous alcohol solution of the vacuum concentrate which had been firstly vacuum concentrated was condensed in the condenser, and a second vacuum concentration was performed until no liquid was generated in the receiver.

Next, after distilling with a pump having a vacuum degree of 1 torr (130 Pa) using a rotary evaporator and completely drying for 12 hours at 85° C, the dried product was cooled to 25°C to finally obtain a recrystallized lithium difluorophosphate crystal in white powder.

### Comparative Example 1

A solid lithium difluorophosphate crystal was produced by performing a process of step 1 of Example 1 above.

Next, the solid lithium difluorophosphate crystal was dissolved again in acetonitrile, recrystallized at 25°C to 0°C, and filtered to obtain a lithium difluorophosphate crystal.

### Examples 2 to 9 and Comparative Examples 2 to 9

Recrystallized lithium difluorophosphate crystals were produced in the same manner as in Example 1 above, but as shown in Table 1 below, the molar ratio of LiPF₆ and a catalyst, the concentration of LiPF₆ in a solvent, and the amount of an aqueous alcohol solution used in the purification process were changed to perform Examples 2 to 9 and Comparative Examples 2 to 9, respectively. In addition, the yield and purity of the crystallized LiPO₂F₂ in step 1 are shown in Table 2 below. In addition, the yield and purity of LiPO₂F₂ recrystallized in step 2 were calculated by Mathematical Equation 1 below based on Comparative Example 1 and were expressed as a relative purity increase/decrease percentage. Relative purity increase / decrease percentage = {(purity of recrystallized LiPO2F2 crystals (%) - purity of LiPO2F2 crystal of Comparative Example 1 (%)) / purity of LiPO2F2 crystal of Comparative Example 1 (%)} × 100%

**[Table 1]**

| Classificatio n | Synthesis of crystallized LiPO₂F₂ (step 1) | | | | Production of recrystallized LiPO₂F₂ crystal (step 2 - purification process) | |
|---|---|---|---|---|---|---|
| | Step 1-1 | | Step 1-2 | | | |
| | (1) | Fluorinati ng agent | (2) | (3) (parts by weight) | LiPO₂F₂ of step 1 (parts by weight) | Aqueous alcohol solution (parts by weight) |
| Example 1 | 1 : 2.5 | NH₄F | 1:0.25 | 287 | 100 | 604 |
| Example 2 | 1 : 2.0 | NH₄F | 1:0.25 | 287 | 100 | 604 |
| Example 3 | 1 : 2.85 | NH₄F | 1:0.25 | 287 | 100 | 604 |
| Example 4 | 1 : 2.5 | NH₄F | 1:0.15 | 287 | 100 | 604 |
| Example 5 | 1 : 2.5 | NH₄F | 1:0.45 | 287 | 100 | 604 |
| Example 6 | 1 : 2.5 | NH₄F | 1:0.25 | 250 | 100 | 604 |
| Example 7 | 1 : 2.5 | NH₄F | 1:0.25 | 320 | 100 | 604 |
| Example 8 | 1 : 2.5 | NH₄F | 1:0.25 | 287 | 100 | 550 |
| Example 9 | 1 : 2.5 | NH₄F | 1:0.25 | 287 | 100 | 640 |
| Comparative Example 1 | 1 : 2.5 | NH₄F | 1:0.25 | 287 | - | |
| Comparative Example 2 | 1 : 1.3 | NH₄F | 1:0.25 | 287 | 100 | 604 |
| Comparative Example 3 | 1 : 3.2 | NH₄F | 1:0.25 | 287 | 100 | 604 |
| Comparative Example 4 | 1 : 2.5 | NH₄F | 1:0.09 | 287 | 100 | 604 |
| Comparative Example 5 | 1 : 2.5 | NH₄F | 1:0.68 | 287 | 100 | 604 |
| Comparative Example 6 | 1 : 2.5 | NH₄F | 1:0.25 | 225 | 100 | 604 |
| Comparative Example 7 | 1 : 2.5 | NH₄F | 1:0.25 | 360 | 100 | 604 |
| Comparative Example 8 | 1 : 2.5 | NH₄F | 1:0.25 | 287 | 100 | 485 |
| Comparative Example 9 | 1 : 2.5 | NH₄F | 1:0.25 | 287 | 100 | 710 |
| (1): Molar ratio of dihalophosphate and fluorinating agent | | | | | | |
| (2): Molar ratio of lithium salt and water | | | | | | |
| (3): Dropwise addition amount of difluorophosphate per 100 parts by weight of lithium salt | | | | | | |

**[Table 2]**

| Classification | Crystallized LiPO₂F₂ (step 1) | | Recrystallized LiPO₂F₂ crystal (step 2) | | Relative purity increase/dec rease percentage (%) |
|---|---|---|---|---|---|
| | Yield (%) | Purity (%) | Yield (%) | Purity (%) | |
| Comparative Example 1 | 90.5 | 97.4 | - | - | - |
| Example 1 | 90.5 | 97.4 | 87.3 | 99.91 | 2.58 |
| Example 2 | 84.6 | 95.8 | 82.4 | 98.96 | 1.60 |
| Example 3 | 89.6 | 96.5 | 87.0 | 99.53 | 2.19 |
| Example 4 | 89.2 | 97.0 | 86.8 | 99.62 | 2.28 |
| Example 5 | 90.6 | 97.1 | 87.7 | 99.73 | 2.39 |
| Example 6 | 90.0 | 96.8 | 86.7 | 99.70 | 2.36 |
| Example 7 | 88.4 | 96.2 | 86.4 | 99.85 | 2.52 |
| Example 8 | 90.5 | 97.4 | 87.5 | 99.78 | 2.44 |
| Example 9 | 90.5 | 97.4 | 86.3 | 99.94 | 2.61 |
| Comparative Example 2 | 75.3 | 94.8 | 73.7 | 98.85 | - |
| Comparative Example 3 | 89.7 | 94.0 | 86.9 | 98.50 | - |
| Comparative Example 4 | 81.3 | 95.1 | 78.8 | 99.02 | - |
| Comparative Example 5 | 88.7 | 92.4 | 85.7 | 97.24 | - |
| Comparative Example 6 | 82.9 | 96.5 | 79.5 | 99.75 | - |
| Comparative Example 7 | 84.5 | 96.2 | 81.8 | 99.82 | - |
| Comparative Example 8 | 90.5 | 97.3 | 88.1 | 98.17 | - |
| Comparative Example 9 | 90.5 | 97.5 | 86.9 | 99.92 | - |

Looking at the yield and purity of Table 2 above, in the cases of Examples 1 to 9, it was confirmed that the yield of the crystallized LiPO₂F₂ (step 1) was 84% or more and the purity was 95% or more, and the yield of the recrystallized LiPO₂F₂ crystal (step 2) was 82% or more and the purity was 98.5% or more. In the case of Comparative Example 2 in which the dihalophosphate and the fluorinating agent were used at a molar ratio of 1:1.3 which is less than a molar ratio of 1: 1.5 molar in step 1-1, compared to Example 1 and Example 2, the yield of the crystallized LiPO₂F₂ (step 1) was very low, and as a result, there was a problem in that the yield of the reaction product in step 2 was also too low. In addition, in the case of Comparative Example 3 in which the dihalophosphate and the fluorinating agent were used at a molar ratio exceeding 1: 3.0 in step 1-1, there was no increase in the yield, and the purity was rather decreased as compared to Examples 1 and 3. It was determined that the purity of the crystallized LiPO₂F₂ was lowered because unnecessary reaction products were synthesized due to the unreacted fluorinating agent.

In addition, in the case of Comparative Example 4 in which a lithium salt and water were used at a molar ratio less than 1:0.10 in step 1-2, compared to Example 1 and Example 4, there was a problem in that the yield of the crystallized LiPO₂F₂ (step 1) was rapidly lowered. In the case of Comparative Example 5 in which a lithium salt and water were used at a molar ratio exceeding 1:0.65, there was a problem in that the purity of the crystallized LiPO₂F₂ was too low as compared to Example 1 and Example 5, and it was determined to be due to the generation of many impurities because unnecessary additional reactions were performed.

In addition, in the case of Comparative Example 6 in which the dropwise addition amount of difluorophosphate in step 1-2 was less than 230 parts by weight, there was a problem in that the yield of the crystallized LiPO₂F₂ was not very good as compared to Example 1 and Example 6, and in the case of Comparative Example 7 in which the dropwise addition amount of difluorophosphate was more than 350 parts by weight in step 1-2, there was a problem in that the yield of the crystallized LiPO₂F₂ was rather decreased as compared to Examples 1 and 7.

In addition, in the case of Comparative Example 8 in which the amount of the aqueous alcohol solution used was less than 500 parts by weight, there was a problem of low purity as compared to Example 8. In addition, in the case of Comparative Example 9 in which the amount of the aqueous alcohol solution used was more than 700 parts by weight in the reaction of step 2, compared to Example 1 or Example 9, there was a problem in that the yield was not increased due to excessive use of the aqueous alcohol solution in the process of step 2.

### Examples 10 to 15 and Comparative Examples 10 to 15

Recrystallized lithium difluorophosphate crystals were produced in the same manner as in Example 1, but Examples 10 to 15 and Comparative Examples 10 to 15 were performed by varying the production conditions as shown in Table 3 below, respectively. In this case, the vacuum compression conditions of step 2 were changed.

**[Table 3]**

| Classificati on (parts by weight) | Synthesis of crystallized LiPO₂F₂ (step 1) | | | Recrystallized LiPO₂F₂ crystal (step 2) | | |
|---|---|---|---|---|---|---|
| | X₁, X₂ of Chemic al Formul a 1 | R of Chemic al Formul a 1 | Lithium salt | Pressure during first vacuum concentrati on | Temperatur e during first vacuum concentrati on | Pressure during second vacuum concentrati on |
| Example 10 | -Cl | Ethyl group | LiCl | 28 torr (3730 Pa) | 43 to 44°C | 1 torr (130 Pa) |
| Example 11 | -Cl | n-Butyl group | LiCl | 28 torr (3730 Pa) | 43 to 44°C | 1 torr (130 Pa) |
| Example 12 | -Cl | tert-Butyl group | LiCl | 28 torr (3730 Pa) | 43 to 44°C | 1 torr (130 Pa) |
| Example 13 | -Cl | Phenyl group | LiCl | 28 torr (3730 Pa) | 43 to 44°C | 1 torr (130 Pa) |
| Example 14 | -Br | Propyl group | LiCl | 28 torr (3730 Pa) | 43 to 44°C | 1 torr (130 Pa) |
| Example 15 | -Cl | Propyl group | LiCl | 28 torr (3730 Pa) | 40 to 41°C | 1 torr (130 Pa) |
| Comparativ e Example 10 | -Cl | Propyl group | LiCl | 28 torr (3730 Pa) | 35 to 36°C | 1 torr (130 Pa) |
| Comparativ e Example 11 | | | | 28 torr (3730 Pa) | 48 to 49°C | 1 torr (130 Pa) |
| Comparativ e Example 12 | | | | 35 torr (4670 Pa) | 43 to 44°C | 1 torr (130 Pa) |
| Comparativ e Example 13 | | | | 18 torr (2400 Pa) | 43 to 44°C | 1 torr (130 Pa) |
| Comparativ e Example 14 | | | | 1 torr (130 Pa) | 43 to 44°C | 1 torr (130 Pa) |
| Comparativ e Example 15 | | | | 28 torr (3730 Pa) | 43 to 44°C | 4 torr (530 Pa) |

**[Table 4]**

| Classification | Crystallized LiPO₂F₂ (step 1) | | Recrystallized LiPO₂F₂ crystal (step 2) | | Relative purity increase/dec rease percentage (%) |
|---|---|---|---|---|---|
| | Yield (%) | Purity (%) | Yield (%) | Purity (%) | |
| Comparative Example 1 | 90.5 | 97.4 | - | - | - |
| Example 1 | 90.5 | 97.4 | 87.3 | 99.91 | 2.58 |
| Example 10 | 90.1 | 96.2 | 86.0 | 99.68 | 2.34 |
| Example 11 | 89.5 | 95.7 | 85.3 | 99.60 | 2.26 |
| Example 12 | 88.4 | 95.4 | 83.8 | 99.52 | 2.18 |
| Example 13 | 86.9 | 95.8 | 82.5 | 99.45 | 2.10 |
| Example 14 | 91.5 | 96.7 | 89.4 | 99.65 | 2.31 |
| Example 15 | 90.5 | 97.4 | 87.0 | 99.93 | 2.60 |
| Comparative Example 10 | 90.5 | 97.4 | 82.5 | 99.81 | - |
| Comparative Example 11 | 90.5 | 97.4 | 87.2 | 98.25 | - |
| Comparative Example 12 | 90.5 | 97.4 | 84.4 | 99.73 | - |
| Comparative Example 13 | 90.5 | 97.4 | Solvent overflow | | - |
| Comparative Example 14 | 90.5 | 97.4 | 88.9 | 98.13 | - |
| Comparative Example 15 | 90.5 | 97.4 | 87.4 | 98.81 | - |
| The relative yield and relative purity of step 2 were measured based on Mathematical Equations 1 and 2 above. | | | | | |

Looking at the yield and purity of step 1 and step 2 in Table 3 and Table 4, in the cases of Examples 10 to 15, the LiPO₂F₂ crystals showed a high yield of 85% or more and a high purity of 95% or more, and the recrystallized LiPO₂F₂ crystals showed a yield of 82% or more and a purity of 99% or more.

In addition, in the case of Comparative Example 10 in which the first vacuum concentration temperature was less than 40°C, compared to Example 15, the yield of the recrystallized LiPO₂F₂ crystals was significantly lower than that of the first yield. In the case of Comparative Example 11 in which the first vacuum concentration temperature was more than 45°C, there was a problem in which crystals were precipitated and there was no significant change in yield, but there was a problem in that the purity was rather reduced.

In addition, in the case of Comparative Example 12 in which the first vacuum concentration was performed under a pressure exceeding 30 torr (4000 Pa) during the first vacuum concentration of the reaction of step 2, there was a problem in that the yield which was 90.5% in step 1 was significantly lowered to 88.4%, and in the case of Comparative Example 13 in which the first vacuum concentration was performed under a pressure of less than 25 torr (3330 Pa), a problem occurred in which the solvent was passed to the pump of the first vacuum concentrator.

In addition, in the case of Comparative Example 14 in which a single step. vacuum concentration, not a multistep vacuum concentration, was performed by performing the first and second vacuum concentrations at the same pressure (1 torr (130 Pa)) and temperature (43°C to 44°C), compared to Example 1, the yield was high, but there was a problem in that the purity was relatively low at 98.13% which is less than 99%.

In addition, in the case of Comparative Example 15 in which the second vacuum concentration was performed under a pressure exceeding 2 torr (270 Pa), compared to Example 1, there was no change in yield, but there was a problem in that the purity was lowered to less than 99%.

### Preparation Examples 1 to 15: Production of non-aqueous electrolyte for secondary battery

Using each of the high-purity lithium difluorophosphate crystals produced in Examples 1 to 15 as electrolytes, non-aqueous electrolytes for secondary batteries were produced, respectively.

Through the above examples, it was confirmed that high-purity lithium difluorophosphate crystals could be produced in high yield using the method proposed by the present invention. The lithium difluorophosphate crystal of the present invention produced by this method may be used as a composition of a stabilizer for a chloroethylene polymer, a catalyst for a reaction lubricant, a disinfectant for a toothbrush, a preservative for wood, and the like, and preferably, it may be introduced as an electrolyte for a non-aqueous electrolyte for a secondary battery to provide a non-aqueous electrolyte for a secondary battery with excellent stability.

## Claims

1. A method for producing a lithium difluorophosphate crystal, comprising:
step 1 of synthesizing a lithium difluorophosphate crystal from dihalophosphate represented by Chemical Formula 1 below; and
step 2 of purifying and recrystallizing the lithium difluorophosphate crystal;
and wherein step 1 comprises:
step 1-1 of synthesizing difluorophosphate represented by Chemical Formula 2 below by reacting a mixed solution in which dihalophosphate represented by Chemical Formula 1 below, a fluorinating agent, and a non-aqueous solvent are mixed under an inert gas;
step 1-2 of adding and reacting the difluorophosphate dropwise to a mixed solution of a lithium salt, water, and a non-aqueous solvent, and then evaporating the non-aqueous solvent to obtain a solid; and
step 1-3 of dissolving the solid in a non-aqueous solvent, recrystallizing at 25°C to 0°C, and filtering to obtain a lithium difluorophosphate crystal; and,
wherein the mixed solution in step 1-1 comprises dihalophosphate and a fluorinating agent at a molar ratio of 1:2.0 to 3.0,
wherein the yield of the lithium difluorophosphate crystal synthesized in step 1 is 82% to 92%, and the purity is 95% to 98%, and
wherein the yield of the recrystallized lithium difluorophosphate crystal in step 2 is 80% to 90%, and the purity may be 99.00% to 99.99%: 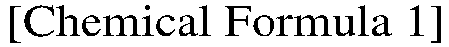 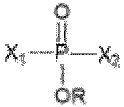
wherein in Chemical Formula 1, X₁ and X₂ are each independently -Cl, -Br, or -I, and R is a C₁ to C₁₀ straight-chain alkyl group, a C₃ to C₁₀ branched alkyl group, a C₆ to C₁₀ cycloalkyl group, or a C₆ to C₂₀ aryl group, 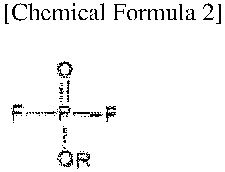 wherein in Chemical Formula 2, R is a C₁ to C₁₀ straight-chain alkyl group, a C₃ to C₁₀ branched alkyl group, a C₆ to C₁₀ cycloalkyl group, or a C₆ to C₂₀ aryl group, provided that R in Chemical Formula 2 is identical to R in Chemical Formula 1.

2. The method of claim 1, wherein the non-aqueous solvents in step 1-1 and step 1-2 each independently comprise one or more selected from the group consisting of cyclic carbonate, chain carbonate, cyclic ester, chain ester, n-hexane, cyclohexane, n-heptane, iso-heptane, benzene, xylene, acetonitrile, methyl ether, ethyl ether, ethylene glycol dimethyl ether, ethylene glycol diethyl ether, propylene glycol dimethyl ether, diethylene glycol dimethyl ether, and tetrahydrofuran.

3. The method of claim 1, wherein the lithium salt in step 1-2 comprises one or more selected from the group consisting of lithium chloride, lithium bromide, lithium fluoride, lithium iodide, lithium hydroxide, lithium carbonate, lithium bicarbonate, lithium phosphate, lithium metaphosphate, lithium acetate, and lithium sulfate.

4. The method of claim 1, wherein the mixed solution in step 1-2 comprises a lithium salt and water at a molar ratio of 1:0.10 to 0.65.

5. The method of claim 1, wherein the amount of difluorophosphate added dropwise is 230 parts by weight to 350 parts by weight based on 100 parts by weight of the lithium salt.

6. The method of claim 1, wherein the non-aqueous solvent in the mixed solution of step 1-2 is used at an amount of 3.5 mL to 5 mL per 1 g of difluorophosphate added dropwise.

7. The method of claim 1, wherein step 2 comprises:
step 2-1 of performing a purification process by adding and stirring a lithium difluorophosphate crystal and an aqueous alcohol solution having a carbon number of 2 to 4 in a reactor;
step 2-2 of firstly vacuum concentrating a purified reaction product;
step 2-3 of secondly vacuum concentrating a first vacuum concentrate; and
step 2-4 of performing a drying process for a second vacuum concentrate and cooling to obtain a recrystallized lithium difluorophosphate crystal,
and the amount of the aqueous alcohol solution of step 2-1 used 500 parts by weight to 700 parts by weight based on 100 parts by weight of the lithium difluorophosphate crystal,
and the purification process of step 2-1 is performed under a nitrogen atmosphere at 23°C to 30°C,
and the first vacuum concentration of step 2-2 is performed by increasing the internal temperature of the reactor to 40°C to 45°C, and then the vacuum concentration be carried out while maintaining a pressure of 25 torr to 30 torr (3330 to 4000 Pa),
and the second vacuum concentration of step 2-3 is performed under a pressure of 2 torr (270 Pa) and at 40°C to 45°C.

## Patentansprüche

1. Verfahren zur Herstellung eines Lithiumdifluorphosphatkristalls, umfassend:
Schritt 1 des Synthetisierens eines Lithiumdifluorphosphatkristalls aus Dihalogenphosphat, dargestellt durch die nachstehende chemische Formel 1; und
Schritt 2 des Reinigens und Rekristallisierens des Lithiumdifluorphosphatkristalls,
und wobei Schritt 1 Folgendes umfasst:
Schritt 1-1 des Synthetisierens von Difluorphosphat, dargestellt durch die nachstehende chemische Formel 2, durch Umsetzen einer Mischlösung, in der Dihalogenphosphat, dargestellt durch die nachstehende chemische Formel 1, ein Fluorierungsmittel und ein wasserfreies Lösungsmittel unter einem Inertgas gemischt sind;
Schritt 1-2 des Hinzufügens und Umsetzens des Difluorphosphats tropfenweise zu einer Mischlösung aus einem Lithiumsalz, Wasser und einem wasserfreien Lösungsmittel und dann Verdampfens des wasserfreien Lösungsmittels, um einen Feststoff zu erlangen; und
Schritt 1-3 des Lösens des Feststoffs in einem wasserfreien Lösungsmittel, Rekristallisierens bei 25 °C bis 0 °C und Filterns, um einen Lithiumdifluorphosphatkristall zu erlangen; und
wobei die Mischlösung in Schritt 1-1 Dihalogenphosphat und ein Fluorierungsmittel in einem Molverhältnis von 1:2,0 bis 3,0 umfasst,
wobei die Ausbeute des in Schritt 1 synthetisierten Lithiumdifluorphosphatkristalls 82 % bis 92 % beträgt und die Reinheit 95 % bis 98 % beträgt und
wobei die Ausbeute des rekristallisierten Lithiumdifluorphosphatkristalls in Schritt 2 80 % bis 90 % beträgt und die Reinheit 99,00 % bis 99,99 % betragen kann: 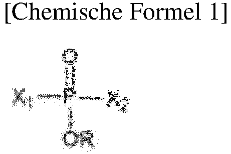
wobei in der chemischen Formel 1 X₁ und X₂ jeweils unabhängig -Cl, -Br oder -I sind und Reine geradkettige C₁- bis C₁₀-Alkylgruppe, eine verzweigte C₃- bis C₁₀-Alkylgruppe, eine C₆-bis C₁₀-Cycloalkylgruppe oder eine C₆- bis C₂₀-Arylgruppe ist, 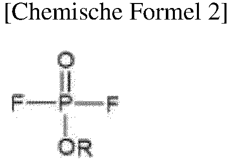
wobei in der chemischen Formel 2 R eine geradkettige C₁- bis C₁₀-Alkylgruppe, eine verzweigte C₃- bis C₁₀-Alkylgruppe, eine C₆- bis C₁₀-Cycloalkylgruppe oder eine C₆- bis C₂₀-Arylgruppe ist, vorausgesetzt, dass R in der chemischen Formel 2 mit R in der chemischen Formel 1 identisch ist.

2. Verfahren nach Anspruch 1, wobei die wasserfreien Lösungsmittel in Schritt 1-1 und Schritt 1-2 jeweils unabhängig eines oder mehrere umfassen, ausgewählt aus der Gruppe bestehend aus cyclischem Carbonat, kettigem Carbonat, cyclischem Ester, kettigem Ester, n-Hexan, Cyclohexan, n-Heptan, iso-Heptan, Benzol, Xylol, Acetonitril, Methylether, Ethylether, Ethylenglycoldimethylether, Ethylenglycoldiethylether, Propylenglycoldimethylether, Diethylenglycoldimethylether und Tetrahydrofuran.

3. Verfahren nach Anspruch 1, wobei das Lithiumsalz in Schritt 1-2 eines oder mehrere umfasst, ausgewählt aus der Gruppe bestehend aus Lithiumchlorid, Lithiumbromid, Lithiumfluorid, Lithiumiodid, Lithiumhydroxid, Lithiumcarbonat, Lithiumbicarbonat, Lithiumphosphat, Lithiummetaphosphat, Lithiumacetat und Lithiumsulfat.

4. Verfahren nach Anspruch 1, wobei die Mischlösung in Schritt 1-2 ein Lithiumsalz und Wasser in einem Molverhältnis von 1:0,10 bis 0,65 umfasst.

5. Verfahren nach Anspruch 1, wobei die Menge des tropfenweise hinzugefügten Difluorphosphats 230 Gewichtsteile bis 350 Gewichtsteile basierend auf 100 Gewichtsteilen des Lithiumsalzes beträgt.

6. Verfahren nach Anspruch 1, wobei das wasserfreie Lösungsmittel in der Mischlösung aus Schritt 1-2 in einer Menge von 3,5 ml bis 5 ml pro 1 g tropfenweise hinzugefügtem Difluorphosphat verwendet wird.

7. Verfahren nach Anspruch 1, wobei Schritt 2 Folgendes umfasst:
Schritt 2-1 des Durchführens eines Reinigungsvorgangs durch Hinzufügen und Rühren eines Lithiumdifluorphosphatkristalls und einer wässrigen Alkohollösung mit einer Kohlenstoffzahl von 2 bis 4 in einem Reaktor;
Schritt 2-2 des erstens Vakuumkonzentrierens eines gereinigten Reaktionsprodukts;
Schritt 2-3 des zweitens Vakuumkonzentrierens eines ersten Vakuumkonzentrats; und
Schritt 2-4 des Durchführens eines Trocknungsvorgangs für ein zweites Vakuumkonzentrat und Abkühlens, um einen rekristallisierten Lithiumdifluorphosphatkristall zu erlangen,
und die Menge der wässrigen Alkohollösung aus Schritt 2-1 500 Gewichtsteile bis 700 Gewichtsteile basierend auf 100 Gewichtsteilen des Lithiumdifluorphosphatkristalls verwendete
und der Reinigungsvorgang aus Schritt 2-1 unter einer Stickstoffatmosphäre bei 23 °C bis 30 °C durchgeführt wird
und die erste Vakuumkonzentration aus Schritt 2-2 durch Erhöhen der Innentemperatur des Reaktors auf 40 °C bis 45 °C durchgeführt wird und dann die Vakuumkonzentration ausgeführt wird, während ein Druck von 25 Torr bis 30 Torr (3330 bis 4000 Pa) aufrechterhalten wird,
und die zweite Vakuumkonzentration aus Schritt 2-3 unter einem Druck von 2 Torr (270 Pa) und bei 40 °C bis 45 °C durchgeführt wird.

## Revendications

1. Procédé de production d'un cristal de difluorophosphate de lithium, comprenant :
l'étape 1 de synthèse d'un cristal de difluorophosphate de lithium à partir d'un dihalogénophosphate représenté par la formule chimique 1 ci-dessous ; et
l'étape 2 de purification et de recristallisation du cristal de difluorophosphate de lithium ;
et ladite étape 1 comprenant :
l'étape 1-1 de synthèse du difluorophosphate représenté par la formule chimique 2 ci-dessous en faisant régir une solution mixte dans laquelle un dihalogénophosphate représenté par la formule chimique 1 ci-dessous, un agent de fluoration et un solvant non aqueux sont mélangés sous un gaz inerte ;
l'étape 1-2 d'ajout et de réaction du difluorophosphate goutte à goutte à une solution mixte d'un sel de lithium, de l'eau et un solvant non aqueux, et ensuite d'évaporation du solvant non aqueux pour obtenir un solide ; et
l'étape 1-3 de dissolution du solide dans un solvant non aqueux, de recristallisation à 25°C à 0°C, et de filtration pour obtenir un cristal de difluorophosphate de lithium ; et,
ladite solution mixte à l'étape 1-1 comprenant un dihalogénophosphate et un agent de fluoration à un rapport molaire de 1:2,0 à 3,0,
le rendement du cristal de difluorophosphate de lithium synthétisé à l'étape 1 valant 82 % à 92 % et la pureté valant 95 % à 98 %, et
le rendement du cristal de difluorophosphate de lithium recristallisé à l'étape 2 valant 80 % à 90 %, et la pureté pouvant valoir 99,00 % à 99,99 % : 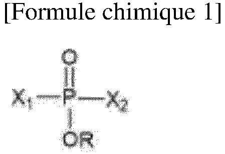
dans laquelle, dans la formule chimique 1, X₁ et X₂ représentent chacun indépendamment un groupe -Cl, -Br ou -I, et R représente un groupe C₁ to C₁₀ alkyle à chaîne droite, un groupe C₃ à C₁₀ alkyle ramifié, un groupe C₆ à C₁₀ cycloalkyle, ou un groupe C₆ à C₂₀ aryle, 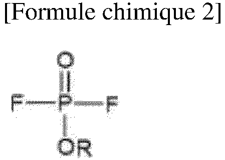
dans laquelle, dans la formule chimique 2, R représente un groupe C₁ à C₁₀ alkyle à chaîne droite, un groupe C₃ à C₁₀ alkyle ramifié, un groupe C₆ à C₁₀ cycloalkyle, ou un groupe C₆ à C₂₀ aryle, à condition que R dans la formule chimique 2 soit identique à R dans la formule chimique 1.

2. Procédé selon la revendication 1, lesdits solvants non aqueux à l'étape 1-1 et à l'étape 2-2 comprenant chacun indépendamment un ou plusieurs composés choisis dans le groupe constitué par un carbonate cyclique, un carbonate à chaîne, un ester cyclique, un ester à chaîne, le n-hexane, le cyclohexane, le n-heptane, l'iso-heptane, le benzène, le xylène, l'acétonitrile, l'éther méthylique, l'éther éthylique, l'éther diméthylique d'éthylène glycol, l'éther diéthylique d'éthylène glycol, l'éther diméthylique de propylène glycol, l'éther diméthylique de diéthylène glycol, et le tétrahydrofurane.

3. Procédé selon la revendication 1, ledit sel de lithium à l'étape 1-2 comprenant un ou plusieurs composés choisis dans le groupe constitué par le chlorure de lithium, le bromure de lithium, le fluorure de lithium, l'iodure de lithium, l'hydroxyde de lithium, le carbonate de lithium, le bicarbonate de lithium, le phosphate de lithium, le métaphosphate de lithium, l'acétate de lithium et le sulfate de lithium.

4. Procédé selon la revendication 1, ladite solution mixte à l'étape 1-2 comprenant un sel de lithium et de l'eau à un rapport molaire de 1:0,10 à 0,65.

5. Procédé selon la revendication 1, la quantité de difluorophosphate ajoutée goutte à goutte représentant 230 parties en poids à 350 parties en poids par rapport à 100 parties en poids du sel de lithium.

6. Procédé selon la revendication 1, ledit solvant non aqueux dans la solution mixte à l'étape 1-2 étant utilisé à une quantité de 3,5 ml à 5 ml pour 1 g de difluorophosphate ajouté goutte à goutte.

7. Procédé selon la revendication 1, ladite étape 2 comprenant :
l'étape 2-1 de réalisation d'un processus de purification par ajout et mélange d'un cristal de difluorophosphate de lithium et d'une solution alcoolique aqueuse comportant un nombre d'atomes de carbone de 2 à 4 dans un réacteur ;
l'étape 2-2 d'une première concentration sous vide d'un produit réactionnel purifié ;
l'étape 2-3 d'une seconde concentration sous vide d'un premier concentré sous vide ; et
l'étape 2-4 de réalisation d'un processus de séchage pour un second concentré sous vide et de refroidissement pour obtenir un cristal de difluorophosphate de lithium recristallisé,
et la quantité de la solution alcoolique aqueuse de l'étape 2-1 a utilisé 500 parties en poids à 700 parties en poids par rapport à 100 parties en poids du cristal de difluorophosphate de lithium,
et le processus de purification de l'étape 2-1 est réalisé sous atmosphère d'azote à 23°C à 30°C,
et la première concentration sous vide de l'étape 2-2 est réalisée en augmentant la température interne du réacteur à 40°C à 45°C, et ensuite la concentration sous vide étant réalisée pendant le maintien de la pression à 25 torr à 30 torr (3300 à 4000 Pa),
et la seconde concentration sous vide de l'étape 2-3 est réalisée sous une pression de 2 torr (270 Pa) et à 40°C à 45°C.
